# EUROPEAN PATENT APPLICATION

(11) **EP 4 431 478 A1**
(43) Date of publication of application: **18.09.2024**
(21) Application number: 22892723.2
(22) Date of filing: 07.11.2022
(51) Int. Cl.: C04B 24/16, B28C 7/04, C04B 24/02, C04B 28/02, C04B 28/14

(54) **FOAMING AGENT COMPOSITION FOR HYDRAULIC COMPOSITION**

(30) Priority: 09.11.2021 JP 2021182631
(71) Applicant: Kao Corporation, Tokyo 103-8210 (JP)
(72) Inventor: TANIMOTO Ryu, Wakayama-shi, Wakayama 640-8580 (JP); TAMAGAWA Ojiro, Wakayama-shi, Wakayama 640-8580 (JP); KOYANAGI Koji, Wakayama-shi, Wakayama 640-8580 (JP)
(74) Representative: Hoffmann Eitle
(86) International application number: PCT/JP2022/041320
(87) International publication number: WO 2023/085224

(57) **Abstract**

Provided are a foaming agent composition for hydraulic compositions, a bubble-containing hydraulic composition and a method for producing the same, whereby, even in hydraulic compositions of the same specific gravity, strength of a hardened product of a hydraulic composition can be enhanced by increasing a bubble size in the hydraulic composition. A foaming agent composition for hydraulic compositions containing, the following component (A1), optionally the following component (A2), and the following component (B),
component (A1): one or more selected from an alkyl or alkenyl sulfate and a salt thereof having an alkyl group or an alkenyl group with 8 or more and 10 or less carbons,
component (A2): one or more selected from surfactants other than component (A1), and
component (B): a monohydric alcohol with 6 or more and 10 or less carbons,
wherein a mass ratio of a content of component (A1) to a total content of components (A1) and (A2), (A1)/[(A1) + (A2)], is 0.8 or more and 1 or less.

## Description

### Field of the Invention

The present invention relates to a foaming agent composition for hydraulic compositions, a bubble-containing hydraulic composition and a method for producing the same.

### Background of the Invention

A weight reduction of a hydraulic composition containing cement or gypsum as a hardening agent has been achieved by introducing bubbles thereinto. In usual, a foam obtained by foaming a liquid composition containing a foaming agent composition and water is mixed with a hydraulic composition or with fine aggregates or various kinds of admixture materials to produce a lightweight bubble-containing hydraulic composition.

JP-A 2018-535909 discloses a gypsum board comprising a set gypsum core disposed between two cover sheets, the set gypsum core comprising a gypsum crystal matrix formed from at least water, stucco and a foam, wherein the foam is formed from a foaming agent comprising at least one alkyl sulfate, at least one alkyl ether sulfate or any combination thereof and a fatty alcohol. Further, the Examples disclose a foaming agent in the form of an alkyl ether sulfate and an alkyl sulfate at a ratio of 40:60, that 1-decanol was used as a fatty alcohol, and that an air void size of a core of an obtained board is 245 µm on arithmetic mean.

JP-A 2004-529050 discloses a gypsum composition comprising, in combination with gypsum and water, a surfactant composition comprising alkyl sulfates of the formula H(CH₂)ₙOSO₃⁻M⁺, in which n is from 6 to 16, the mean number of carbon atoms in the alkyl sulfate composition nₘ being between 10 and 11, and M is a monovalent cation. Further, in the Examples, a volume of a foam formed after a mixture of a surfactant composition and water is stirred in a mixer is measured as an evaluation of the composition.

### Summary of the Invention

While a weight reduction of a hardened product of a bubble-containing hydraulic composition containing cement or gypsum as a hardening agent can be achieved by reducing a specific gravity by containing bubbles therein, the weight reduction results in reduced strength. One possible method for suppressing the strength reduction is to increase a bubble size, but existing technologies had limitations of their ability to increase the bubble size. Therefore, a technology for attaining both weight reduction and strength of a hardened product of a bubble-containing hydraulic composition by establishing a technology of increasing a bubble size of the hardened product is demanded.

The present invention provides a foaming agent composition for hydraulic compositions, a bubble-containing hydraulic composition and a method for producing the same, whereby, even in bubble-containing hydraulic compositions of the same specific gravity, strength of a hardened product of a hydraulic composition can be enhanced by increasing a bubble size in the hydraulic composition.

The present invention relates to a foaming agent composition for hydraulic compositions containing, the following component (A1), optionally the following component (A2), and the following component (B),
component (A1): one or more selected from an alkyl or alkenyl sulfate and a salt thereof having an alkyl group or an alkenyl group with 8 or more and 10 or less carbons,
component (A2): one or more selected from surfactants other than component (A1), and
component (B): a monohydric alcohol with 6 or more and 10 or less carbons,
wherein a mass ratio of a content of component (A1) to a total content of components (A1) and (A2), (A1)/[(A1) + (A2)], is 0.8 or more and 1 or less.

Further, the present invention relates to a bubble-containing hydraulic composition containing, a hydraulic powder, water, the above component (A1), optionally the above component (A2), and the above component (B), wherein a mass ratio of a content of component (A1) to a total content of components (A1) and (A2), (A1)/[(A1) + (A2)], is 0.8 or more and 1 or less.

Further, the present invention relates to a method for producing a bubble-containing hydraulic composition including the following steps 1 and 2,
<step 1>
   a step of foaming a liquid composition containing the foaming agent composition for hydraulic compositions of the present invention and water to obtain a foam, and
<step 2>
   a step of mixing the foam obtained in step 1 with a hydraulic composition containing a hydraulic powder and water.

According to the present invention, provided are a foaming agent composition for hydraulic compositions, a bubble-containing hydraulic composition and a method for producing the same, whereby, even in bubble-containing hydraulic compositions of the same specific gravity, strength of a hardened product of a hydraulic composition can be enhanced by increasing a bubble size in the hydraulic composition.

### Embodiments of the Invention

The reason why the foaming agent composition for hydraulic compositions of the present invention can enhance strength of a hardened product of a hydraulic composition by increasing a bubble size in the hydraulic composition is not wholly certain, but it is inferred to be as follows.

Conventionally, as disclosed, for example, in JP-A 2004-529050, a bubble size or the like in a hydraulic composition has been controlled by adjusting foam properties in an aqueous system when a liquid composition containing a foaming agent composition for hydraulic compositions and water is foamed.

The present inventors focused attention on not only foam properties in the aqueous system but also foam properties in the hydraulic composition, and discovered that, when hydraulic compositions have the same specific gravity, strength of a hydraulic composition can be enhanced by increasing a bubble size in the hydraulic composition.

The present inventors found that, in the case of the conventional method of controlling only foam properties in the aqueous system, a certain level of foam properties such as foamability, foam stability or the like needs to be satisfied to introduce a certain amount of foam into the hydraulic composition, and in concomitance therewith, bubbles are stabilized in the hydraulic composition and unlikely to coalesce, resulting in a problem that a bubble size cannot be increased.

The present inventors then found that the above problem can be solved by controlling, among the foam properties in the aqueous system, especially foamability, and a foam coalescence rate in the hydraulic composition.

More specifically, the above problem is solved by combining an alkyl or alkenyl sulfate having a short-chain alkyl group or alkenyl group as component (A1) and a short-chain monohydric alcohol as component (B).

In water, component (A1) forms a micelle, and component (B) having a low affinity for water quickly adsorbs to a gas-liquid interface of the micelle formed of component (A1) while being incorporated into the micelle, thereby reducing surface tension. This can significantly improve foamability in the aqueous system. On the other hand, it is inferred that, in a hydraulic composition, coalescence of bubbles can be promoted to increase a bubble size due to poor foam stability caused by components (A1) and (B) with a short carbon chain length, and thus, both foamability in the aqueous system and foam coalescence performance in the hydraulic composition can be achieved.

Note that the present invention is not limited to the above expression mechanism.

### [Foaming agent composition for hydraulic compositions]

### <Component (A1)>

The foaming agent composition for hydraulic compositions of the present invention contains one or more selected from an alkyl or alkenyl sulfate and a salt thereof having an alkyl group or an alkenyl group with 8 or more and 10 or less carbons as component (A1).

Component (A1) has an alkyl group or an alkenyl group and preferably an alkyl group with 8 or more, and 10 or less and preferably 10 carbons from the viewpoint of increasing a bubble size in a hydraulic composition.

Examples of the salt of component (A1) include one or more selected from an alkali metal salt such as a sodium salt, a potassium salt or the like, an ammonium salt and an organic ammonium salt.

Specific examples of component (A1) include one or more selected from octyl sulfate, decyl sulfate, 2-ethylhexyl sulfate, 2-propylheptyl sulfate and salts of these, and from the viewpoints of increasing a bubble size in a hydraulic composition and reducing an addition amount to a hydraulic composition, component (A1) preferably contains preferably one or more selected from octyl sulfate, decyl sulfate and salts of these and more preferably one or more compounds selected from decyl sulfate and a salt thereof. These compounds can reduce an addition amount when a specific bubble size is obtained. A content of one or more compounds selected from decyl sulfate and a salt thereof in component (A1) is preferably 80 mass% or more, more preferably 90 mass% or more, further preferably 95 mass% or more and furthermore preferably 97 mass% or more, and preferably 100 mass% or less and more preferably substantially 100 mass%. Further, component (A1) preferably contains one or more compounds selected from octyl sulfate, 2-ethylhexyl sulfate, decyl sulfate and salts of these from the viewpoint of obtaining a larger bubble size in a hydraulic composition. A content of one or more compounds selected from octyl sulfate, 2-ethylhexyl sulfate, decyl sulfate and salts of these in component (A1) is preferably 80 mass% or more and more preferably 90 mass% or more, and preferably 100 mass% or less and more preferably substantially 100 mass%.

When the composition contains one or more selected from an alkyl or alkenyl sulfate and a salt thereof having an alkyl group or an alkenyl group with 8 carbons such as octyl sulfate, 2-ethylhexyl sulfate or the like (hereinafter referred to as C8AS), and one or more selected from an alkyl or alkenyl sulfate and a salt thereof having an alkyl group or an alkenyl group with 10 carbons such as decyl sulfate or the like (hereinafter referred to as C10AS) as component (A1), a mass ratio of a content of C8AS to a content of C10AS (C8AS/C10AS) in component (A1) is preferably 0.4 or more, more preferably 0.6 or more and further preferably 0.8 or more, and preferably 1.6 or less, more preferably 1.4 or less and further preferably 1.2 or less from the viewpoint of obtaining a larger bubble size in a hydraulic composition.

### <Component (A2)>

The foaming agent composition for hydraulic compositions of the present invention may optionally contain one or more selected from surfactants other than component (A1) as component (A2).

Examples of component (A2) include one or more selected from an anionic surfactant other than component (A1), a nonionic surfactant, a cationic surfactant and an amphoteric surfactant. From the viewpoint of increasing a bubble size in a hydraulic composition, component (A2) preferably contains one or more selected from an anionic surfactant and a nonionic surfactant, and more preferably contains one or more selected from one or more selected from an alkyl or alkenyl sulfate and a salt thereof other than component (A1) (hereinafter referred to as component (A21)), one or more selected from a polyoxyalkylene alkyl or alkenyl ether sulfate and a salt thereof having an alkyl group or an alkenyl group with 8 or more and 16 or less carbons (hereinafter referred to as component (A22)), and a glycoside-type nonionic surfactant (hereinafter referred to as component (A23)). In component (A2), a content of a total of an anionic surfactant and a nonionic surfactant and preferably a content of a total of components (A21), (A22) and (A23) is preferably 80 mass% or more and more preferably 90 mass% or more, and preferably 100 mass% or less and more preferably substantially 100 mass%.

Examples of the anionic surfactant other than component (A1) include one or more selected from an alkyl or alkenyl sulfonic acid having an alkyl group or an alkenyl group, an alkyl or alkenyl sulfate having an alkyl group or an alkenyl group (excluding component (A1)), an olefin sulfonic acid, a polyoxyalkylene alkyl or alkenyl ether sulfate having an alkyl group or an alkenyl group, a polyoxyalkylene alkyl or alkenyl ether carboxylic acid having an alkyl group or an alkenyl group and salts of these.

Examples of the salts of these anionic surfactants include one or more selected from an alkali metal salt such as a sodium salt, a potassium salt or the like, an ammonium salt and an organic ammonium salt.

Examples of the nonionic surfactant include one or more selected from an alkyl monoglyceryl ether, a polyoxyalkylene monoalkyl or alkenyl ether, an alkyl glycoside or an alkyl polyglycoside (a glycoside-type nonionic surfactant), a sorbitan-based nonionic surfactant, an aliphatic alkanol amide, a fatty acid monoglyceride and a sucrose fatty acid ester. When the composition contains a nonionic surfactant as component (A2), the composition preferably contains, among these, a glycoside-type nonionic surfactant from the viewpoint of increasing a bubble size in a hydraulic composition. When the composition contains a nonionic surfactant as component (A2), a content of a glycoside-type nonionic surfactant in component (A2) is preferably 80 mass% or more and more preferably 90 mass% or more, and preferably 100 mass% or less and more preferably substantially 100 mass%.

Examples of the cationic surfactant include one or more selected from an alkyl trimethyl ammonium salt, a dialkyl dimethyl ammonium salt, an alkyl ammonium salt, a benzalkonium salt, a benzethonium salt, an imidazolium salt and a pyridinium salt. Examples of the salts include halogen salts.

Examples of the amphoteric surfactant include one or more selected from an alkyl dimethyl amine oxide, an alkyl dimethyl amino acetic acid betaine, an alkyl hydroxy sulfobetaine, an alkyl amidopropyl betaine and an alkyl carboxymethyl hydroxyethyl imidazolium betaine.

The foaming agent composition for hydraulic compositions of the present invention may contain one or more selected from an alkyl or alkenyl sulfate and a salt thereof other than component (A1) (hereinafter referred to as component (A21)) as component (A2) from the viewpoint of reducing an addition amount to a hydraulic composition. When the composition contains component (A21) as component (A2), a content of component (A21) in component (A2) is preferably 80 mass% or more and more preferably 90 mass% or more, and preferably 100 mass% or less and further preferably substantially 100 mass%.

Component (A21) has an alkyl group or an alkenyl group and preferably an alkyl group with preferably 12 or more, and preferably 18 or less and more preferably 16 or less carbons from the viewpoint of reducing an addition amount to a hydraulic composition.

Examples of the salt of component (A21) include one or more selected from an alkali metal salt such as a sodium salt, a potassium salt or the like, an ammonium salt and an organic ammonium salt.

Specific examples of component (A21) include one or more selected from lauryl sulfate, tridecyl sulfate, myristyl sulfate, cetyl sulfate, stearyl sulfate, oleyl sulfate and salts of these, and from the viewpoint of solubility in water, one or more selected from lauryl sulfate, tridecyl sulfate, myristyl sulfate and salts of these are preferable.

The foaming agent composition for hydraulic compositions of the present invention may contain one or more selected from a polyoxyalkylene alkyl or alkenyl ether sulfate and a salt thereof having an alkyl group or an alkenyl group with 8 or more and 16 or less carbons (hereinafter referred to as component (A22)) as component (A2) from the viewpoint of reducing an addition amount to a hydraulic composition. When the composition contains component (A22) as component (A2), a content of component (A22) in component (A2) is preferably 80 mass% or more and more preferably 90 mass% or more, and preferably 100 mass% or less and further preferably substantially 100 mass%.

Component (A22) has an alkyl group or an alkenyl group and preferably an alkyl group with preferably 8 or more, more preferably 10 or more and further preferably 12 or more, and preferably 18 or less, more preferably 16 or less and further preferably 14 or less carbons from the viewpoint of reducing an addition amount to a hydraulic composition.

The oxyalkylene group of component (A22) is an oxyethylene group or an oxypropylene group and preferably an oxyethylene group, and an average number of added moles of the oxyalkylene group is preferably 1 or more and more preferably 2 or more from the viewpoint of solubility in water, and preferably 10 or less, more preferably 6 or less and further preferably 4 or less from the viewpoint of reducing an addition amount to a hydraulic composition.

Examples of the salt of component (A22) include one or more selected from an alkali metal salt such as a sodium salt, a potassium salt or the like, an ammonium salt and an organic ammonium salt.

Specific examples of component (A22) include one or more selected from polyoxyethylene octyl ether sulfate, polyoxyethylene decyl ether sulfate, polyoxyethylene lauryl ether sulfate, polyoxyethylene tridecyl ether sulfate, polyoxyethylene myristyl ether sulfate, polyoxyethylene cetyl ether sulfate, polyoxyethylene stearyl ether sulfate, polyoxypropylene octyl ether sulfate, polyoxypropylene decyl ether sulfate, polyoxypropylene lauryl ether sulfate, polyoxypropylene tridecyl ether sulfate, polyoxypropylene myristyl ether sulfate, polyoxypropylene cetyl ether sulfate, polyoxypropylene stearyl ether sulfate, polyoxyethylene polyoxypropylene octyl ether sulfate, polyoxyethylene polyoxypropylene decyl ether sulfate, polyoxyethylene polyoxypropylene lauryl ether sulfate, polyoxyethylene polyoxypropylene tridecyl ether sulfate, polyoxyethylene polyoxypropylene myristyl ether sulfate, polyoxyethylene polyoxypropylene cetyl ether sulfate, polyoxyethylene polyoxypropylene stearyl ether sulfate and salts of these, and from the viewpoint of frothing performance, one or more selected from polyoxyethylene decyl ether sulfate, polyoxyethylene lauryl ether sulfate, polyoxyethylene myristyl ether sulfate, polyoxypropylene decyl ether sulfate, polyoxypropylene lauryl ether sulfate, polyoxypropylene myristyl ether sulfate, polyoxyethylene polyoxypropylene decyl ether sulfate, polyoxyethylene polyoxypropylene lauryl ether sulfate, polyoxyethylene polyoxypropylene myristyl ether sulfate and salts of these are preferable.

The foaming agent composition for hydraulic compositions of the present invention may contain a glycoside-type nonionic surfactant (hereinafter referred to as component (A23)) as component (A2) from the viewpoint of reducing an addition amount to a hydraulic composition. When the composition contains component (A23) as component (A2), a content of component (A23) in component (A2) is preferably 80 mass% or more and more preferably 90 mass% or more, and preferably 100 mass% or less and further preferably substantially 100 mass%.

The glycoside-type nonionic surfactant is more preferably a compound represented by the following general formula (a23):

R^{1a}-(OR^{2a})ₓG_{y} (a23)

wherein R^{1a} represents a linear alkyl group with 8 or more and preferably 10 or more, and 16 or less and preferably 14 or less carbons, R^{2a} represents an alkylene group with 2 or more and 4 or less carbons, preferably an ethylene group or a propylene group and more preferably an ethylene group, G represents a residue derived from a reducing sugar, x represents a number whose average value is 0 or more and 6 or less, and y represents a number whose average value is 1 or more, and 10 or less, preferably 5 or less and more preferably 2 or less.

In the compound of the general formula (a23), G is a residue derived from a reducing sugar. The reducing sugar, a raw material of G may be either an aldose or a ketose. Further, examples of the reducing sugar, a raw material of G include a triose with 3 carbons, a tetrose with 4 carbons, a pentose with 5 carbons and a hexose with 6 carbons. Specific examples of the aldose include apiose, arabinose, galactose, glucose, lyxose, mannose, gulose, an aldose, idose, talose and xylose. Further, specific examples of the ketose include fructose. The reducing sugar, a raw material of G, of the present invention is preferably an aldopentose, an aldose with 5 carbons, or an aldohexose, an aldose with 6 carbons, and more preferably glucose.

### <Component (B)>

The foaming agent composition for hydraulic compositions of the present invention contains a monohydric alcohol with 6 or more and 10 or less carbons as component (B).

Component (B) has 6 or more, and 10 or less and preferably 8 carbons from the viewpoints of quick foamability and foam stability.

Component (B) is a monohydric alcohol having a linear or branched hydrocarbon group, preferably a linear or branched alkyl group and more preferably a linear alkyl group from the viewpoints of quick foamability and foam stability.

Specific examples of component (B) include one or more selected from hexanol, octanol, decanol, 2-ethylhexanol and 2-propylheptanol, and from the viewpoint of frothing performance, the composition preferably contains preferably one or more selected from octanol and decanol and more preferably octanol. A content of one or more selected from octanol and decanol in component (B) is preferably 80 mass% or more and more preferably 90 mass% or more, and preferably 100 mass% or less and further preferably substantially 100 mass%. Further, a content of octanol in component (B) is preferably 80 mass% or more and more preferably 90 mass% or more, and preferably 100 mass% or less and further preferably substantially 100 mass%.

### <Composition and others>

The foaming agent composition for hydraulic compositions of the present invention contains component (A1) in an amount of preferably 15 mass% or more, more preferably 20 mass% or more and further preferably 25 mass% or more from the viewpoint of being able to reduce an addition amount, and preferably 80 mass% or less, more preferably 60 mass% or less, further preferably 40 mass% or less and furthermore preferably 30 mass% or less from the viewpoint of workability at the time of addition such as fluidity or the like.

In the present invention, a mass of component (A1) is specified using a value expressed in terms of a sodium salt.

When the foaming agent composition for hydraulic compositions of the present invention contains component (A2), the composition contains component (A2) in an amount of preferably 0.5 mass% or more, more preferably 1.0 mass% or more and further preferably 1.2 mass% or more from the viewpoint of frothing performance, and preferably 15 mass% or less, more preferably 10 mass% or less, further preferably 5 mass% or less, furthermore preferably 3 mass% or less and furthermore preferably 2 mass% or less from the viewpoint of increasing a bubble size in a hydraulic composition.

In the present invention, a mass of an anionic surfactant contained in component (A2) is specified using a value expressed in terms of a sodium salt. Further, a mass of a cationic surfactant contained in component (A2) is specified using a value expressed in terms of a chloride salt.

The foaming agent composition for hydraulic compositions of the present invention contains component (B) in an amount of preferably 0.5 mass% or more, more preferably 1.0 mass% or more and further preferably 1.5 mass% or more from the viewpoint of increasing a bubble size in a hydraulic composition, and preferably 10 mass% or less, more preferably 5 mass% or less and further preferably 3 mass% or less from the viewpoints of increasing a bubble size in a hydraulic composition and reducing odor.

In the foaming agent composition for hydraulic compositions of the present invention, a mass ratio of a content of component (A1) to a total content of components (A1) and (A2), (A1)/[(A1) + (A2)], is 0.8 or more, preferably 0.85 or more, more preferably 0.9 or more and further preferably 0.95 or more from the viewpoint of increasing a bubble size in a hydraulic composition, and 1 or less from the viewpoints of an increased bubble size in a hydraulic composition and frothing performance.

In the foaming agent composition for hydraulic compositions of the present invention, a mass ratio of a content of component (B) to a content of component (A1), (B)/(A1), is preferably 0.01 or more, more preferably 0.03 or more and further preferably 0.05 or more from the viewpoint of reducing a specific gravity of a hardened product of a hydraulic composition, and preferably 0.30 or less, more preferably 0.20 or less and further preferably 0.10 or less from the viewpoint of uniform bubble size in a hydraulic composition.

In the foaming agent composition for hydraulic compositions of the present invention, a mass ratio of a content of component (B) to a total content of components (A1) and (A2), (B)/[(A1) + (A2)], is preferably 0.005 or more, more preferably 0.01 or more, further preferably 0.03 or more and furthermore preferably 0.05 or more from the viewpoints of an increased bubble size in a hydraulic composition and frothing performance, and preferably 0.30 or less, more preferably 0.25 or less, further preferably 0.15 or less and furthermore preferably 0.10 or less from the viewpoints of increasing a bubble size in a hydraulic composition and reducing odor.

When the foaming agent composition for hydraulic compositions of the present invention contains component (A21), the composition contains component (A21) in an amount of preferably 0.1 mass% or more, more preferably 0.5 mass% or more and further preferably 0.9 mass% or more from the viewpoints of an increased bubble size in a hydraulic composition and frothing performance, and preferably 15 mass% or less, more preferably 10 mass% or less, further preferably 5 mass% or less, furthermore preferably 3 mass% or less, furthermore preferably 2.5 mass% or less and furthermore preferably 1.5 mass% or less from the viewpoint of increasing a bubble size in a hydraulic composition.

In the present invention, a mass of component (A21) is specified using a value expressed in terms of a sodium salt.

When the foaming agent composition for hydraulic compositions of the present invention contains component (A21), a mass ratio of a content of component (A1) to a total content of components (A1) and (A21), (A1)/[(A1) + (A21)], is 0.8 or more, preferably 0.85 or more and more preferably 0.9 or more from the viewpoint of increasing a bubble size in a hydraulic composition, and 1 or less and preferably 0.95 or less from the viewpoints of an increased bubble size in a hydraulic composition and frothing performance.

When the foaming agent composition for hydraulic compositions of the present invention contains component (A21), a mass ratio of a content of component (B) to a total content of components (A1) and (A21), (B)/[(A1) + (A21)], is preferably 0.005 or more, more preferably 0.01 or more, further preferably 0.03 or more and furthermore preferably 0.05 or more from the viewpoints of an increased bubble size in a hydraulic composition and frothing performance, and preferably 0.3 or less, more preferably 0.25 or less, further preferably 0.15 or less and furthermore preferably 0.10 or less from the viewpoints of increasing a bubble size in a hydraulic composition and reducing odor.

When the foaming agent composition for hydraulic compositions of the present invention contains component (A22), the composition contains component (A22) in an amount of preferably 0.5 mass% or more, more preferably 1.0 mass% or more and further preferably 1.25 mass% or more from the viewpoints of an increased bubble size in a hydraulic composition and frothing performance, and preferably 15 mass% or less, more preferably 10 mass% or less, further preferably 6 mass% or less, furthermore preferably 5 mass% or less, furthermore preferably 3 mass% or less and furthermore preferably 2 mass% or less from the viewpoint of increasing a bubble size in a hydraulic composition.

In the present invention, a mass of component (A22) is specified using a value expressed in terms of a sodium salt.

When the foaming agent composition for hydraulic compositions of the present invention contains component (A22), a mass ratio of a content of component (A1) to a total content of components (A1) and (A22), (A1)/[(A1) + (A22)], is 0.8 or more, preferably 0.85 or more and more preferably 0.9 or more from the viewpoint of increasing a bubble size in a hydraulic composition, and 1 or less and preferably 0.95 or less from the viewpoints of an increased bubble size in a hydraulic composition and frothing performance.

When the foaming agent composition for hydraulic compositions of the present invention contains component (A22), a mass ratio of a content of component (B) to a total content of components (A1) and (A22), (B)/[(A1) + (A22)], is preferably 0.005 or more, more preferably 0.01 or more, further preferably 0.03 or more and furthermore preferably 0.05 or more from the viewpoints of an increased bubble size in a hydraulic composition and frothing performance, and preferably 0.30 or less, more preferably 0.25 or less, further preferably 0.15 or less and furthermore preferably 0.10 or less from the viewpoints of increasing a bubble size in a hydraulic composition and reducing odor.

When the foaming agent composition for hydraulic compositions of the present invention contains component (A23), the composition contains component (A23) in an amount of preferably 0.5 mass% or more, more preferably 1.0 mass% or more and further preferably 1.25 mass% or more from the viewpoints of an increased bubble size in a hydraulic composition and frothing performance, and preferably 15 mass% or less, more preferably 10 mass% or less, further preferably 6 mass% or less, furthermore preferably 5 mass% or less, furthermore preferably 3 mass% or less and furthermore preferably 2 mass% or less from the viewpoint of increasing a bubble size in a hydraulic composition.

When the foaming agent composition for hydraulic compositions of the present invention contains component (A23), a mass ratio of a content of component (A1) to a total content of components (A1) and (A23), (A1)/[(A1) + (A23)], is 0.8 or more, preferably 0.85 or more and more preferably 0.9 or more from the viewpoint of increasing a bubble size in a hydraulic composition, and 1 or less and preferably 0.96 or less from the viewpoints of an increased bubble size in a hydraulic composition and frothing performance.

When the foaming agent composition for hydraulic compositions of the present invention contains component (A23), a mass ratio of a content of component (B) to a total content of components (A1) and (A23), (B)/[(A1) + (A23)], is preferably 0.005 or more, more preferably 0.01 or more, further preferably 0.03 or more and furthermore preferably 0.045 or more from the viewpoints of an increased bubble size in a hydraulic composition and frothing performance, and preferably 0.30 or less, more preferably 0.25 or less, further preferably 0.15 or less and furthermore preferably 0.10 or less from the viewpoints of increasing a bubble size in a hydraulic composition and reducing odor.

The foaming agent composition for hydraulic compositions of the present invention may contain water. The foaming agent composition for hydraulic compositions of the present invention contains water in an amount of preferably 10 mass% or more, preferably 20 mass% or more, more preferably 30 mass% or more and further preferably 40 mass% or more, and preferably 90 mass% or less, more preferably 80 mass% or less and further preferably 70 mass% or less. In the foaming agent composition for hydraulic compositions containing component (A1), optionally component (A2), component (B) and water, a content of a total of components (A1), (A2) and (B) can be preferably 10 mass% or more, preferably 15 mass% or more, more preferably 20 mass% or more and further preferably 25 mass% or more, and preferably 60 mass% or less, more preferably 50 mass% or less and further preferably 40 mass% or less from the viewpoint of frothing performance.

The foaming agent composition for hydraulic compositions of the present invention can optionally contain a thickener, a chelating agent, a heavy metal scavenger, a rust inhibitor, a preservative, a colorant, a fragrance, an anti-foaming agent, a solvent, a dispersant, a flocculant, a water-soluble polymer or the like. Those which do not qualify as components (A1), (A2) and (B) are used for them.

The foaming agent composition for hydraulic compositions of the present invention is obtained by mixing component (A1), component (A2), component (B) and an optional component. During mixing, heating may be appropriately carried out to reduce a solution viscosity.

Examples of uses covered by the foaming agent composition for hydraulic compositions of the present invention include gypsum slurry, lightweight milk (aerated milk, air milk), lightweight mortar (aerated mortar, air mortar), lightweight concrete (aerated concrete, air concrete), backfilling materials, filling-in materials, concrete blocks for construction, ALC (autoclaved lightweight aerated concrete), grouting materials, porous ceramic materials, brick, fire-resistant materials, lightweight embankments, mortar for pumping and other bubble-containing hydraulic compositions. It is expected that these bubble-containing hydraulic compositions are provided with functions such as weight reduction, strength improvement, fluidity improvement, heat insulation, heat resistance, viscosity addition and fluidity control by mixing with bubbles.

Among these bubble-containing hydraulic compositions, the foaming agent composition for hydraulic compositions of the present invention is suitable for use in gypsum slurry.

### [Bubble-containing hydraulic composition and method for producing the same]

As a method for producing a bubble-containing hydraulic composition, a combining/weight reducing method including, frothing the foaming agent composition for hydraulic compositions of the present invention, and combining the composition as a foam with a hydraulic substance is preferable in view of entrainment of uniform bubbles. The foaming agent composition for hydraulic compositions of the present invention or a mixed liquid obtained by diluting the composition with water may be directly kneaded into paste, slurry, mortar or concrete containing cement or gypsum as a hydraulic substance. A method for adding the foaming agent composition for hydraulic compositions of the present invention to a hydraulic composition is not limited, and a method for obtaining a foam from the foaming agent composition for hydraulic compositions of the present invention or the mixed liquid obtained by diluting the composition with water is not limited, either.

The present invention provides a bubble-containing hydraulic composition containing, a hydraulic powder, water, the above component (A1), optionally the above component (A2), and the above component (B), wherein a mass ratio of a content of component (A1) to a total content of components (A1) and (A2), (A1)/[(A1) + (A2)], is 0.8 or more and 1 or less.

The matters stated in the foaming agent composition for hydraulic compositions of the present invention can be appropriately applied to the bubble-containing hydraulic composition of the present invention.

Components (A1), (A2) and (B) are the same as in the aspects stated in the foaming agent composition for hydraulic compositions of the present invention.

The hydraulic powder is a powder having the physical property of hardening through a hydration reaction, is exemplified by cement, gypsum or the like, and is preferably gypsum.

Examples of the cement include ordinary Portland cement, belite cement, moderate heat cement, high early strength cement, ultra high early strength cement, sulfate resistant cement or the like, and may include blast furnace slag cement, fly ash cement, silica fume cement or the like obtained by adding blast furnace slag, fly ash, silica fume, stone powder (calcium carbonate powder) or the like to these cements.

The bubble-containing hydraulic composition of the present invention has a water/hydraulic powder ratio of preferably 20 mass% or more, more preferably 30 mass% or more, further preferably 40 mass% or more and furthermore preferably 60 mass% or more from the viewpoint of fluidity of slurry, and preferably 100 mass% or less, more preferably 90 mass% or less and further preferably 80 mass% or less from the viewpoint of strength of a hardened product.

Here, the water/hydraulic powder ratio is a mass percentage (mass%) of water to the hydraulic powder in the hydraulic composition, and is calculated by water/hydraulic powder × 100. The water/hydraulic powder ratio is calculated on the basis of an amount of a powder having the physical property of hardening through a hydration reaction. When the powder having the physical property of hardening through a hydration reaction contains a high strength admixture material, an amount of the high strength admixture material is also included in the amount of the hydraulic powder. The same applies to other quantitative relations in the hydraulic composition in connection with the hydraulic powder.

The bubble-containing hydraulic composition of the present invention contains component (A1) in an amount relative to 100 parts by mass of the hydraulic powder of preferably 0.005 parts by mass or more, more preferably 0.01 parts by mass or more and further preferably 0.015 parts by mass or more from the viewpoint of reducing a specific gravity of a hardened product, and preferably 0.1 parts by mass or less, more preferably 0.08 parts by mass or less and further preferably 0.06 parts by mass or less from the viewpoint of strength of a hardened product.

When the bubble-containing hydraulic composition of the present invention contains component (A2), the composition contains component (A2) in an amount relative to 100 parts by mass of the hydraulic powder of preferably 0.0005 parts by mass or more, more preferably 0.0015 parts by mass or more and further preferably 0.0015 parts by mass or more from the viewpoint of reducing a specific gravity of a hardened product, and preferably 0.015 parts by mass or less, more preferably 0.010 parts by mass or less and further preferably 0.005 parts by mass or less from the viewpoint of strength of a hardened product.

The bubble-containing hydraulic composition of the present invention contains component (B) in an amount relative to 100 parts by mass of the hydraulic powder of preferably 0.0001 parts by mass or more, more preferably 0.0005 parts by mass or more, further preferably 0.001 parts by mass or more, furthermore preferably 0.0015 parts by mass or more, furthermore preferably 0.002 parts by mass or more and furthermore preferably 0.003 parts by mass or more from the viewpoint of reducing a specific gravity of a hardened product, and preferably 0.020 parts by mass or less, more preferably 0.015 parts by mass or less, further preferably 0.010 parts by mass or less and furthermore preferably 0.005 parts by mass or less from the viewpoint of strength of a hardened product.

In the bubble-containing hydraulic composition of the present invention, a mass ratio of a content of component (A1) to a total content of components (A1) and (A2), (A1)/[(A1) + (A2)], is 0.8 or more, preferably 0.85 or more, more preferably 0.9 or more and further preferably 0.95 or more from the viewpoint of increasing a bubble size in the hydraulic composition, and 1 or less from the viewpoints of an increased bubble size in the hydraulic composition and frothing performance.

In the bubble-containing hydraulic composition of the present invention, a mass ratio of a content of component (B) to a content of component (A1), (B)/(A1), is preferably 0.01 or more, more preferably 0.03 or more and further preferably 0.05 or more from the viewpoint of reducing a specific gravity of a hardened product of the hydraulic composition, and preferably 0.30 or less, more preferably 0.20 or less and further preferably 0.10 or less from the viewpoint of uniform bubble size in the hydraulic composition.

In the bubble-containing hydraulic composition of the present invention, a mass ratio of a content of component (B) to a total content of components (A1) and (A2), (B)/[(A1) + (A2)], is preferably 0.005 or more, more preferably 0.01 or more, further preferably 0.03 or more and furthermore preferably 0.05 or more from the viewpoints of an increased bubble size in the hydraulic composition and frothing performance, and preferably 0.3 or less, more preferably 0.25 or less, further preferably 0.15 or less and furthermore preferably 0.10 or less from the viewpoints of increasing a bubble size in the hydraulic composition and reducing odor.

When the bubble-containing hydraulic composition of the present invention contains component (A21) as component (A2), the composition contains component (A21) in an amount relative to 100 parts by mass of the hydraulic powder of preferably 0.0001 parts by mass or more, preferably 0.0005 parts by mass or more and more preferably 0.0010 parts by mass or more from the viewpoint of reducing a specific gravity of a hardened product, and preferably 0.015 parts by mass or less, more preferably 0.010 parts by mass or less and further preferably 0.005 parts by mass or less from the viewpoint of strength of a hardened product.

When the bubble-containing hydraulic composition of the present invention contains component (A21) as component (A2), a mass ratio of a content of component (A1) to a total content of components (A1) and (A21), (A1)/[(A1) + (A21)], is 0.8 or more, preferably 0.85 or more and more preferably 0.9 or more from the viewpoint of increasing a bubble size in the hydraulic composition, and 1 or less and preferably 0.95 or less from the viewpoints of an increased bubble size in the hydraulic composition and frothing performance.

When the bubble-containing hydraulic composition of the present invention contains component (A21) as component (A2), a mass ratio of a content of component (B) to a total content of components (A1) and (A21), (B)/[(A1) + (A21)], is preferably 0.005 or more, more preferably 0.01 or more, further preferably 0.03 or more and furthermore preferably 0.05 or more from the viewpoints of an increased bubble size in the hydraulic composition and frothing performance, and preferably 0.3 or less, more preferably 0.25 or less, further preferably 0.15 or less and furthermore preferably 0.10 or less from the viewpoints of increasing a bubble size in the hydraulic composition and reducing odor.

When the bubble-containing hydraulic composition of the present invention contains component (A22) as component (A2), the composition contains component (A22) in an amount relative to 100 parts by mass of the hydraulic powder of preferably 0.0005 parts by mass or more, more preferably 0.0010 parts by mass or more and further preferably 0.0015 parts by mass or more from the viewpoint of reducing a specific gravity of a hardened product, and preferably 0.015 parts by mass or less, more preferably 0.010 parts by mass or less and further preferably 0.005 parts by mass or less from the viewpoint of strength of a hardened product.

When the bubble-containing hydraulic composition of the present invention contains component (A22) as component (A2), a mass ratio of a content of component (A1) to a total content of components (A1) and (A22), (A1)/[(A1) + (A22)], is 0.8 or more, preferably 0.85 or more and more preferably 0.9 or more from the viewpoint of increasing a bubble size in the hydraulic composition, and 1 or less and preferably 0.95 or less from the viewpoints of an increased bubble size in the hydraulic composition and frothing performance.

When the bubble-containing hydraulic composition of the present invention contains component (A22) as component (A2), a mass ratio of a content of component (B) to a total content of components (A1) and (A22), (B)/[(A1) + (A22)], is preferably 0.005 or more, more preferably 0.01 or more, further preferably 0.03 or more and furthermore preferably 0.05 or more from the viewpoints of an increased bubble size in the hydraulic composition and frothing performance, and preferably 0.3 or less, more preferably 0.25 or less, further preferably 0.15 or less and furthermore preferably 0.10 or less from the viewpoints of increasing a bubble size in the hydraulic composition and reducing odor.

When the bubble-containing hydraulic composition of the present invention contains component (A23) as component (A2), the composition contains component (A23) in an amount relative to 100 parts by mass of the hydraulic powder of preferably 0.0005 parts by mass or more, more preferably 0.0010 parts by mass or more and further preferably 0.0015 parts by mass or more from the viewpoint of reducing a specific gravity of a hardened product, and preferably 0.015 parts by mass or less, more preferably 0.010 parts by mass or less and further preferably 0.005 parts by mass or less from the viewpoint of strength of a hardened product.

When the bubble-containing hydraulic composition of the present invention contains component (A23) as component (A2), a mass ratio of a content of component (A1) to a total content of components (A1) and (A23), (A1)/[(A1) + (A23)], is 0.8 or more, preferably 0.85 or more and more preferably 0.9 or more from the viewpoint of increasing a bubble size in the hydraulic composition, and 1 or less and preferably 0.96 or less from the viewpoints of an increased bubble size in the hydraulic composition and frothing performance.

When the bubble-containing hydraulic composition of the present invention contains component (A23) as component (A2), a mass ratio of a content of component (B) to a total content of components (A1) and (A23), (B)/[(A1) + (A23)], is preferably 0.005 or more, more preferably 0.01 or more, further preferably 0.03 or more and furthermore preferably 0.045 or more from the viewpoints of an increased bubble size in the hydraulic composition and frothing performance, and preferably 0.30 or less, more preferably 0.25 or less, further preferably 0.15 or less and furthermore preferably 0.10 or less from the viewpoints of increasing a bubble size in the hydraulic composition and reducing odor.

The bubble-containing hydraulic composition of the present invention can contain a fine aggregate and/or a coarse aggregate. Further, the bubble-containing hydraulic composition of the present invention can contain an admixture agent or an admixture material publicly known in this industry.

A specific gravity of the bubble-containing hydraulic composition of the present invention is preferably 0.3 or more, more preferably 0.4 or more and further preferably 0.5 or more from the viewpoint of strength, and preferably 0.9 or less, more preferably 0.8 or less and further preferably 0.7 or less from the viewpoint of handleability.

The bubble-containing hydraulic composition of the present invention contains bubbles. An average bubble size of a hardened product of the bubble-containing hydraulic composition of the present invention is preferably 200 µm or more, more preferably 300 µm or more and further preferably 400 µm or more from the viewpoint of improving strength of the hardened product, and preferably 1250 µm or less, more preferably 1000 µm or less, further preferably 800 µm or less, furthermore preferably 700 µm or less, furthermore preferably 650 um or less and furthermore preferably 600 µm or less from the viewpoint of aesthetic cross-sectional appearance.

The average bubble size is calculated from an average (arithmetic mean) of values of diameters of 100 bubble cross sections arbitrarily measured by observing, with a digital microscope, a cross section produced by preparing the hardened product of the bubble-containing hydraulic composition and arbitrarily cutting the hardened product. Note that the measurements of the diameters of the bubble cross sections employ, as the diameters, a diameter in the case of a circular bubble cross section, a major axis in the case of an oval bubble cross section, and the longest portion in the case of an irregularly-shaped bubble cross section.

The bubble-containing hydraulic composition of the present invention can be produced using the foaming agent composition for hydraulic compositions of the present invention.

In other words, the present invention provides a method for producing a bubble-containing hydraulic composition including the following steps 1 and 2,
<step 1>
   a step of foaming a liquid composition containing the foaming agent composition for hydraulic compositions of the present invention and water to obtain a foam, and
<step 2>
   a step of mixing the foam obtained in step 1 with a hydraulic composition containing a hydraulic powder and water.

The bubble-containing hydraulic composition of the present invention can be prepared by this producing method.

The aspects stated in the foaming agent composition for hydraulic compositions of the present invention and the bubble-containing hydraulic composition of the present invention can be appropriately applied to the method for producing a bubble-containing hydraulic composition of the present invention.

In the method for producing a bubble-containing hydraulic composition of the present invention, the content of each component and the mass ratios between them stated in the bubble-containing hydraulic composition of the present invention can be appropriately applied by reading the content of each component as a mixing amount.

In step 1, an expansion ratio of the liquid composition depends on uses of the hydraulic composition or the like, but is preferably 5 times or more, more preferably 7 times or more and further preferably 10 times or more from the viewpoint of economic efficiency, and preferably 30 times or less, more preferably 25 times or less and further preferably 20 times or less from the viewpoint of kneading performance.

In step 2, a mixing amount of the foam relative to the hydraulic composition depends on uses of the hydraulic composition or the like, but is preferably 50 volume% or more, more preferably 100 volume% or more and further preferably 150 volume% or more from the viewpoint of a weight reduction of a hardened product, and preferably 400 volume% or less, more preferably 300 volume% or less and further preferably 200 volume% or less from the viewpoint of strength of a hardened product. In this producing method, an admixture agent or an admixture material publicly known in this industry can be mixed in step 1 and/or step 2.

### [Bubble-containing gypsum slurry and method for producing the same]

In the bubble-containing hydraulic composition of the present invention, the hydraulic powder is preferably gypsum. In the present invention, a bubble-containing hydraulic composition containing gypsum as a hydraulic powder is also referred to as a bubble-containing gypsum slurry.

In other words, the present invention provides a bubble-containing gypsum slurry containing, gypsum, water, the above component (A1), optionally the above component (A2), and the above component (B), wherein a mass ratio of a content of component (A1) to a total content of components (A1) and (A2), (A1)/[(A1) + (A2)], is 0.8 or more and 1 or less.

The bubble-containing gypsum slurry of the present invention is suitable for use in gypsum boards.

The matters stated in the foaming agent composition for hydraulic compositions of the present invention, the bubble-containing hydraulic composition of the present invention and the method for producing a bubble-containing hydraulic composition of the present invention can be appropriately applied to the bubble-containing gypsum slurry of the present invention.

Components (A1), (A2) and (B) are the same as in the aspects stated in the foaming agent composition for hydraulic compositions of the present invention.

In the bubble-containing gypsum slurry of the present invention, the content of each component and the mass ratios between them stated in the bubble-containing hydraulic composition of the present invention can be appropriately applied by reading the hydraulic powder as gypsum.

In the bubble-containing gypsum slurry of the present invention, a specific gravity and an average bubble size fall within the same range as the range stated in the bubble-containing hydraulic composition of the present invention.

As the gypsum, any gypsum such as high-quality neutralized gypsum, phosphogypsum, a byproduct of phosphoric acid, flue gas desulfurization gypsum generated by thermal power generation, natural gypsum containing various impurities or clays, a mixture of them or the like can be used.

Clay contained in gypsum is composed mainly of hydrous silicate minerals with a layered structure (hereinafter referred to as clay minerals), and examples of clay minerals contained as fine-grained minerals in this clay include kaolin minerals (kaolinite, dickite and nacrite), serpentine (lizardite, antigorite and chrysotile), mica clay minerals (illite, sericite, glauconite and celadonite), chlorite, vermiculite and smectite (montmorillonite, beidellite, nontronite, saponite and hectorite).

Gypsum includes anhydrous gypsum, hemihydrate gypsum, dihydrate gypsum or the like. As a raw material gypsum, natural gypsum or chemical gypsum such as neutralized gypsum or by-product gypsum or the like can be used alone or a mixture of two or more of them can be used. Examples of major chemical gypsum include phosphogypsum, fluorogypsum, titanium gypsum or flue gas desulfurization gypsum or the like. Further, raw material gypsums may also include recycled gypsum. Recycled gypsum may be any recycled gypsum recovered from waste gypsum boards generated in-house by gypsum board manufacturers or waste gypsum boards generated during new construction and during demolition or the like. The present invention can be suitably used for any raw material gypsum of these, and also has excellent effects on those which are obtained by blending them at various proportions.

The bubble-containing gypsum slurry of the present invention can contain an additive for use in gypsum boards or the like. Such an additive includes a general-purpose water reducing agent, anti-foaming agent, foam control agent, hardening control agent, water repellent, adhesive, retarder or the like, and production of a gypsum board is also performed by further adding glass fiber, carbon fiber, used paper, virgin pulp or the like as reinforcing fiber or together with a lightweight aggregate such as perlite, styrene foam or the like.

The bubble-containing gypsum slurry of the present invention can be produced using the foaming agent composition for hydraulic compositions of the present invention.

In other words, the present invention provides a method for producing a bubble-containing gypsum slurry including the following steps 1 and 2,
<step 1>
   a step of foaming a liquid composition containing the foaming agent composition for hydraulic compositions of the present invention and water to obtain a foam, and
<step 2>
   a step of mixing the foam obtained in step 1 with a gypsum slurry containing gypsum and water.

The bubble-containing gypsum slurry of the present invention can be prepared by this producing method.

The aspects stated in the foaming agent composition for hydraulic compositions of the present invention, the bubble-containing hydraulic composition and the method for producing the same of the present invention, and the bubble-containing gypsum slurry of the present invention can be appropriately applied to the method for producing a bubble-containing gypsum slurry of the present invention.

In the method for producing a bubble-containing hydraulic composition of the present invention, the content of each component and the mass ratios between them stated in the bubble-containing hydraulic composition of the present invention can be appropriately applied by reading the hydraulic powder as gypsum and further reading the content of each component as a mixing amount. Temperatures of the foam and the gypsum slurry used for mixing are each preferably 15°C or more and 40°C or less.

Steps 1 and 2 can be performed in conformity with the method for producing a bubble-containing hydraulic composition of the present invention.

### Examples

The components used in the examples and comparative examples are shown below.
Component (A1)
   · C10AS: sodium decyl sulfate
   · C8AS: sodium octyl sulfate
   · s-C8AS: sodium 2-ethylhexyl sulfate
Component (A2)
   · C12AS: sodium lauryl sulfate, component (A21)
   · C13AS: sodium alkyl sulfate (C12/C14/C16 = 63.5/23.5/13.0), component (A21)
   · AES: sodium polyoxyethylene alkyl ether sulfate, product name "EMAL D-3-D" manufactured by Kao Corporation, component (A22)
   · AG: alkyl polyglycoside (lauryl glycoside), product name "MYDOL 12" manufactured by Kao Corporation, component (A23)
Component (B)
   · C8OH: octanol, product name "KALCOL 0898" manufactured by Kao Corporation
   · C6OH: hexanol, manufactured by FUJIFILM Wako Pure Chemical Corporation
   · C10OH: decanol, product name "KALCOL 1098" manufactured by Kao Corporation
   · s-C8OH: 2-ethylhexanol, manufactured by FUJIFILM Wako Pure Chemical Corporation
Component (B') (comparative component for component (B))
   · C12OH: lauryl alcohol, product name "KALCOL 2098" manufactured by Kao Corporation

### (1) Preparation of foaming agent composition for hydraulic compositions

Each foaming agent composition for hydraulic compositions shown in Tables 1 to 3 was prepared by the following method. Raw materials were added to a 50 mL screw cap tube at predetermined proportions such that a total was 30 g, and stirred with a stirrer at 1000 rpm for 3 hours. When a solution viscosity was high and stirring efficiency was low, heating at 40°C was appropriately carried out.

### (2) Preparation of gypsum slurry

The prepared foaming agent composition for hydraulic compositions in Tables 1 to 3 and water were mixed at a mass ratio of 1:99 to prepare an aqueous solution with a concentration of the foaming agent composition for hydraulic compositions of 1.0 mass% (100-fold dilution). 25 g of the prepared aqueous solution was added into a 1 L disposable cup, and stirred with a flat 6 paddle blade (FP-50, manufactured by AS ONE Corporation) at 2000 rpm (EUROSTAR 200 control, manufactured by IKA Japan K.K.) for 60 seconds to obtain a foam. Note that, in Table 1, the concentration of the aqueous solution of the foaming agent composition for hydraulic compositions was changed to a concentration shown in Table 1 instead of 1.0 mass% such that a specific gravity of a hardened product of a gypsum slurry to be obtained was about 0.5.

200 g of calcined gypsum, 2 g of dihydrate gypsum, 150 g of water and 0.8 g of a water reducing agent (MIGHTY 150, manufactured by Kao Corporation) were added to a 500 mL disposable cup, and stirred for 20 seconds using a hand mixer (MK-H4, manufactured by Panasonic Corporation) with its knob set to 3 to prepare a gypsum slurry before adding to the foam.

The whole amount of the prepared gypsum slurry was added to 25 g of the foam prepared in the 1 L disposable cup, and they were kneaded for 30 seconds at 1500 rpm with the flat 6 paddle blade in the 1 L disposable cup to obtain a bubble-containing gypsum slurry. Note that a water/gypsum ratio of the gypsum slurry was 75 mass%. Temperatures of the foam and the gypsum slurry used for kneading were both 20°C.

### (3) Measurement of average bubble size in gypsum

The obtained bubble-containing gypsum slurry was poured into a mold for cylindrical specimens with a diameter of 5 cm and a height of 10 cm (PLAMOLD, manufactured by Nifco Inc.), and left to stand for 1 hour or more at a room temperature.

The hardened gypsum slurry was demolded from the mold for cylindrical specimens, dried by leaving it to stand in a thermostatic chamber at 60°C for 24 hours, and then cut at a portion at a height of 5 cm to prepare a cross section of the hardened product. Diameters of 100 bubble cross sections were arbitrarily measured by observing the cross section with a digital microscope, and an average bubble size was calculated from an arithmetic mean of those values. Note that the measurements of the diameters of the bubble cross sections employ, as the diameters, a diameter in the case of a circular bubble cross section, a major axis in the case of an oval bubble cross section, and the longest portion in the case of an irregularly-shaped bubble cross section. The results are shown in Tables 1 to 3.

Further, the obtained hardened product of gypsum slurry had a specific gravity shown in Table 1. Further, the obtained hardened products of gypsum slurry in Tables 2 to 3 had a specific gravity of 0.28 to 0.72.

### (4) Measurement of strength of gypsum

Immediately after the hardened product of gypsum slurry in Table 1 obtained in (3) was left to stand in a thermostatic chamber at 40°C for 2 hours, a compression strength thereof was measured with a strength testing machine (CONCRETO 2000X, SHIMADZU CORPORATION) at a compression rate of 1 mm per minute.

The results are shown in Table 1.

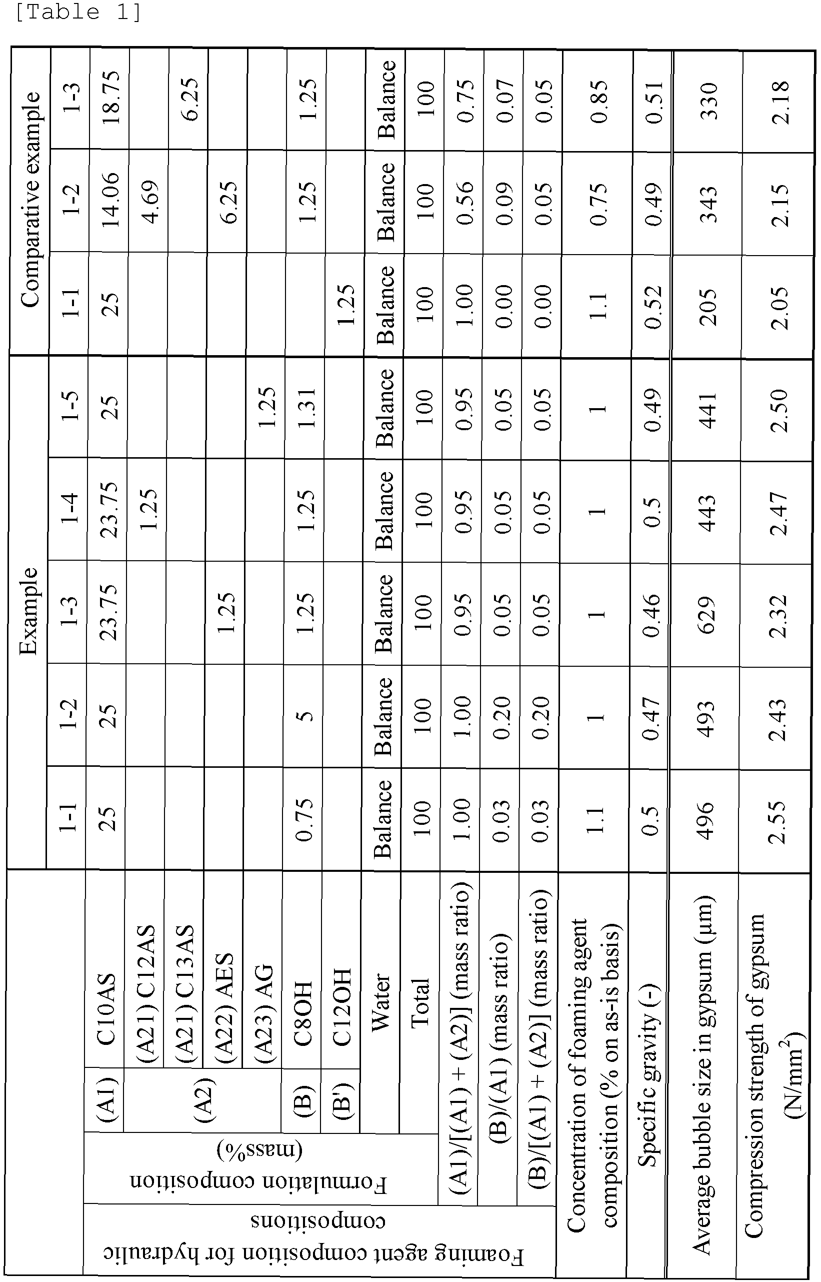

It is understood from the results in Table 1 that, in the hardened products of gypsum slurry of the same level of specific gravity, strength of a hardened product of gypsum slurry is enhanced by increasing an average bubble size in the hardened product of gypsum slurry.

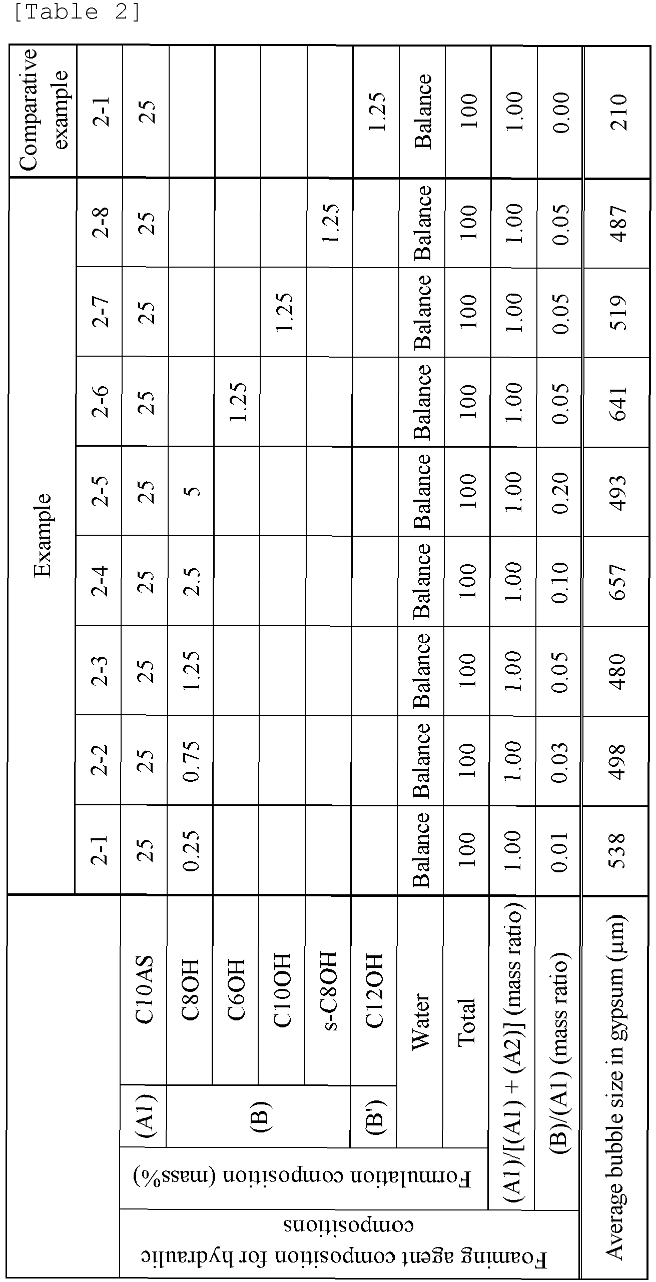

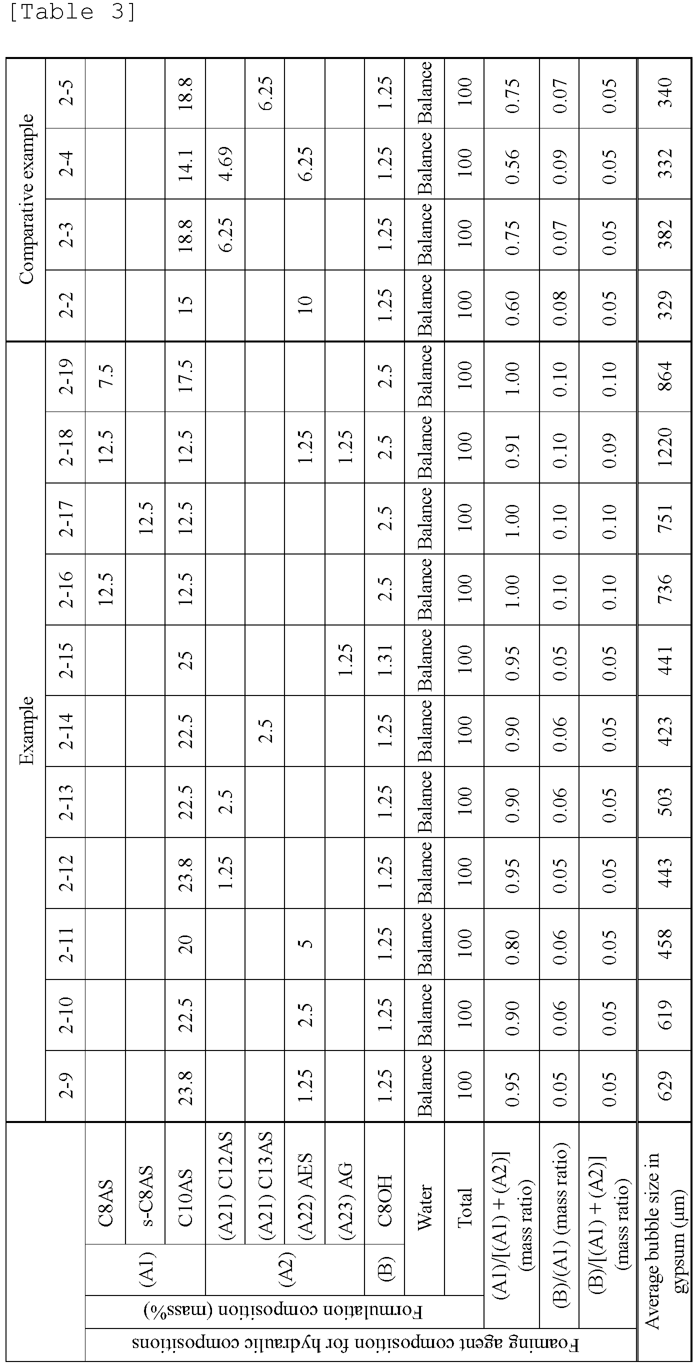

## Claims

1. A foaming agent composition for hydraulic compositions comprising, the following component (A1), optionally the following component (A2), and the following component (B),
component (A1): one or more selected from an alkyl or alkenyl sulfate and a salt thereof having an alkyl group or an alkenyl group with 8 or more and 10 or less carbons,
component (A2): one or more selected from surfactants other than the component (A1), and
component (B): a monohydric alcohol with 6 or more and 10 or less carbons,
wherein a mass ratio of a content of the component (A1) to a total content of the components (A1) and (A2), (A1)/[(A1) + (A2)], is 0.8 or more and 1 or less.

2. The foaming agent composition for hydraulic compositions according to claim 1, comprising the component (A1) in an amount of 15 mass% or more and 80 mass% or less.

3. The foaming agent composition for hydraulic compositions according to claim 1 or 2, wherein a mass ratio of a content of the component (A1) to a total content of the components (A1) and (A2), (A1)/[(A1) + (A2)], is 0.9 or more and 1 or less.

4. The foaming agent composition for hydraulic compositions according to any one of claims 1 to 3, wherein a mass ratio of a content of the component (B) to a content of the component (A1), (B)/(A1), is 0.01 or more and 0.3 or less.

5. The foaming agent composition for hydraulic compositions according to any one of claims 1 to 4, wherein a mass ratio of a content of the component (B) to a total content of the components (A1) and (A2), (B)/[(A1) + (A2)], is 0.005 or more and 0.3 or less.

6. The foaming agent composition for hydraulic compositions according to any one of claims 1 to 5, wherein the component (A2) is one or more selected from one or more selected from an alkyl or alkenyl sulfate and a salt thereof other than the component (A1) (hereinafter referred to as component (A21)), one or more selected from a polyoxyalkylene alkyl or alkenyl ether sulfate and a salt thereof having an alkyl group or an alkenyl group with 8 or more and 16 or less carbons (hereinafter referred to as component (A22)), and a glycoside-type nonionic surfactant (hereinafter referred to as component (A23)).

7. The foaming agent composition for hydraulic compositions according to claim 6, wherein a mass ratio of a content of the component (A1) to a total content of the components (A1) and (A21), (A1)/[(A1) + (A21)], is 0.8 or more and 1 or less.

8. The foaming agent composition for hydraulic compositions according to claim 6 or 7, wherein a mass ratio of a content of the component (B) to a total content of the components (A1) and (A21), (B)/[(A1) + (A21)], is 0.005 or more and 0.3 or less.

9. The foaming agent composition for hydraulic compositions according to any one of claims 6 to 8, wherein a mass ratio of a content of the component (A1) to a total content of the components (A1) and (A22), (A1)/[(A1) + (A22)], is 0.8 or more and 1 or less.

10. The foaming agent composition for hydraulic compositions according to any one of claims 6 to 9, wherein a mass ratio of a content of the component (B) to a total content of the components (A1) and (A22), (B)/[(A1) + (A22)], is 0.005 or more and 0.3 or less.

11. The foaming agent composition for hydraulic compositions according to any one of claims 6 to 10, wherein a content of the component (A22) is 6 mass% or less.

12. The foaming agent composition for hydraulic compositions according to any one of claims 1 to 11, wherein the composition is for use in gypsum slurry.

13. A bubble-containing hydraulic composition comprising, a hydraulic powder, water, the following component (A1), optionally the following component (A2), and the following component (B),
component (A1): one or more selected from an alkyl or alkenyl sulfate and a salt thereof having an alkyl group or an alkenyl group with 8 or more and 10 or less carbons,
component (A2): one or more selected from surfactants other than the component (A1), and
component (B): a monohydric alcohol with 6 or more and 10 or less carbons,
wherein a mass ratio of a content of the component (A1) to a total content of the components (A1) and (A2), (A1)/[(A1) + (A2)], is 0.8 or more and 1 or less.

14. The bubble-containing hydraulic composition according to claim 13, wherein the hydraulic powder is gypsum.

15. The bubble-containing hydraulic composition according to claim 13 or 14, wherein an average bubble size of a hardened product of the bubble-containing hydraulic composition is 200 µm or more and 800 µm or less.

16. A method for producing a bubble-containing hydraulic composition comprising the following steps 1 and 2,
<step 1>
a step of foaming a liquid composition containing the foaming agent composition for hydraulic compositions according to any one of claims 1 to 11 and water to obtain a foam, and
<step 2>
a step of mixing the foam obtained in the step 1 with a hydraulic composition containing a hydraulic powder and water.

17. The method for producing a bubble-containing hydraulic composition according to claim 16, wherein the hydraulic powder is gypsum.
